# EUROPEAN PATENT APPLICATION

(11) **EP 4 618 244 A1**
(43) Date of publication of application: **17.09.2025**
(21) Application number: 24215776.6
(22) Date of filing: 27.11.2024
(51) Int. Cl.: H01M 10/613, H01M 10/617, H01M 10/625, H01M 50/204, H01M 50/249, H01M 50/358

(54) **BATTERY MODULE**

(30) Priority: 12.03.2024 KR 20240034746
(71) Applicant: SAMSUNG SDI CO., LTD., Yongin-si, Gyeonggi-do 17084 (KR)
(72) Inventor: YOON, Jongwook, 17084 Yongin-si (KR)
(74) Representative: Marks & Clerk LLP

(57) **Abstract**

A battery module includes an inner case having an inner space, the inner case including a plurality of vent holes that communicate with the inner space, are apart from each other in a first direction, and have different areas from one another; an outer case coupled to an outside of the inner case, the outer case accommodating the inner case; a distribution passage between the outer case and the inner case, communicating with the plurality of vent holes, and extending in the first direction; a fluid port configured for a fluid to enter and/or exit through one end of the distribution passage, wherein the cross-sectional area of the distribution passage varies in the first direction, and the areas of the plurality of vent holes and the cross-sectional area of the distribution passage, which communicate with each other, are inversely proportional to each other in the first direction.

## Description

### BACKGROUND

### 1. Field

Embodiments of the present disclosure relate to a battery module, and, for example, to a cooling structure of a case of a battery module.

### 2. Description of the Related Art

Secondary batteries are rechargeable and dischargeable unlike primary batteries that are not rechargeable (e.g., should not be recharged). Low-capacity secondary batteries are used in small-sized portable electronic devices such as smartphones, feature phones, laptop computers, digital cameras, and/or camcorders, whereas large-capacity secondary batteries are widely used as motor-driving power sources (e.g., automotive batteries), power storage batteries, and/or the like, of hybrid electric vehicles, electric vehicles, energy storage systems (ESSs), and/or the like. A secondary battery includes an electrode assembly including a positive electrode and a negative electrode, a case accommodating the electrode assembly, an electrode terminal connected to the electrode assembly, and/or the like.

The information disclosed in this section of the present disclosure is only for improving the understanding of the present disclosure, and therefore may include information that does not constitute prior art.

### SUMMARY

Generally, a battery pack may be used as an apparatus to store energy for an energy storage system (ESS) or an electric vehicle (EV). Examples of the EV may include a hybrid electric vehicle (HEV), a plug-in hybrid electric vehicle (PHEV), a battery electric vehicle (BEV), and/or the like.

A battery pack is formed by coupling a plurality of battery modules to each other. A battery module may be manufactured by electrically connecting a plurality of battery cells to each other and placing them inside a case. When thermal runaway occurs in a battery cell of a battery module, it is desirable to prevent or reduce secondary incidents (e.g., damages or accidents) caused by an internal explosive pressure. A battery module has a structure for effectively cooling heat generated from a battery cell. A cooling structure of a battery module may be of an air-cooling type or kind or water-cooling type or kind. However, a cooling structure of comparable battery modules has a problem in that the cooling efficiency is unsatisfactory due to the uneven distribution of a fluid for cooling. In addition, the cooling structure of battery modules has a problem in that the structure is complicated, resulting in high manufacturing costs.

Aspects of one or more embodiments of the present disclosure are directed toward a battery module with improved cooling efficiency and reduced manufacturing cost by improving a structure of a case of the battery module.

Additional aspects will be set forth in part in the description which follows and, in part, will be apparent from the description, or may be learned by practice of the presented embodiments of the present disclosure.

According to one or more embodiments of the present disclosure, a battery module includes an inner case having an inner space in which a plurality of battery cells are accommodated, the inner case including a plurality of vent holes that communicate with the inner space, are apart from each other in a first direction, and have different areas from one another, an outer case coupled to an outside of the inner case, the outer case accommodating the inner case to protect the plurality of battery cells, a distribution passage between the outer case and the inner case, communicating with the plurality of vent holes, and extending in the first direction, a fluid port configured for or to allow a fluid to enter and/or exit through one end of the distribution passage, wherein a cross-sectional area of the distribution passage varies in the first direction, and the areas of the plurality of vent holes and the cross-sectional area of the distribution passage, which communicate with each other, are inversely proportional to each other in the first direction.

In one or more embodiments, an upper end portion and a lower end portion of the distribution passage may include a coupling portion at which the outer case and the inner case are coupled together.

In one or more embodiments, the outer case may include a gradient protrusion that protrudes in a direction facing (e.g., opposite to) the inner case, a protrusion amount of the gradient protrusion varies in the first direction, and the distribution passage may be (e.g., may be formed by) a space between the gradient protrusion and the inner case.

In one or more embodiments, the protrusion amount of the gradient protrusion may vary linearly along the first direction starting from one end of the distribution passage.

In one or more embodiments, the inner case may be coupled to an upper end surface and a lower end surface of the gradient protrusion in a sliding structure (e.g., the inner case and the outer case may slide relative to each other in the first direction at the gradient protrusion).

In one or more embodiments, the plurality of vent holes may be slot-shaped holes, wherein lengths of the slot-shaped holes extend in a direction normal (e.g., perpendicular) to the first direction.

In one or more embodiments, the outer case comprises the fluid port and one end of the distribution passage may be connected to the fluid port of the outer case.

In one or more embodiments, the fluid port may be a fluid input port.

In one or more embodiments, the fluid port may be a fluid output port.

In one or more embodiments, the fluid that passes through the fluid port may be liquid.

In one or more embodiments, the fluid that passes through the fluid port may be gas.

At least some of the above and other features of the invention are set out in the claims.

### BRIEF DESCRIPTION OF THE DRAWINGS

The above and other aspects, features, and/or principles of certain embodiments of the present disclosure will be more apparent from the following description taken in conjunction with the accompanying drawings, in which:
FIG. 1 is a perspective view showing an external structure in which an outer case and an inner case are combined to form a battery module according to one or more embodiments of the present disclosure;
FIG. 2 is a perspective view of the structure shown in FIG. 1 viewed from another direction, according to one or more embodiments of the present disclosure;
FIG. 3 is an exploded perspective view showing key components of FIG. 2, according to one or more embodiments of the present disclosure;
FIG. 4 is a cross-sectional perspective view taken along the line IV-IV of FIG. 2, according to one or more embodiments of the present disclosure;
FIG. 5 is a cross-sectional perspective view taken along the line V-V of FIG. 2, according to one or more embodiments of the present disclosure; and
FIG. 6 is a perspective view showing a detailed structure of the outer case according to one or more embodiments of the present disclosure.

### DETAILED DESCRIPTION

The present disclosure may be modified in many alternative forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Hereinafter, example embodiments will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from among a, b, and c," "at least one from among a, b, and c," "one from among a, b, and c", "at least one of a to c" indicates only a, only b, only c, both a and b, both a and c, both b and c, all of a, b, and c, or variations thereof.

Hereinafter, embodiments of the present disclosure will be described in more detail with reference to the accompanying drawings. Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

It should be understood that the configurations shown in the drawings and embodiments described in this specification are merely the example embodiments of the present disclosure, and do not represent all of the technical ideas of the present disclosure, such that there may be one or more suitable equivalents and variations that replace them at the time of filing the present application.

As used herein, "comprise," "comprising, "include," "including," "have," and "having," when used in this specification, specify the presence of the stated features, shapes, numbers, steps, operations, members, components, and/or the presence of groups thereof, and do not exclude the presence or addition of one or more different features, shapes, numbers, operations, members, components, and /or groups thereof. Further, the use of "can" or "may" when describing embodiments of the present disclosure refer to "one or more embodiments of the present disclosure."

To help understanding of the present disclosure, the accompanying drawings may not be shown according to the actual scale, but the dimensions of some components may be exaggerated for clarity. In the drawings, the relative sizes of elements, layers, and regions may be exaggerated for clarity.

Unless otherwise noted, like reference numerals denote like elements throughout the attached drawings and the written description, and thus, duplicative descriptions thereof may not be provided. The same reference numeral may be given to the same component in different embodiments.

The statement that two comparison targets are "the same" as each other may mean that they are "substantially the same" as each other. Thus, a case where they are "substantially the same" as each other may include a case where they deviate from each other at what is regarded as a low level, for example, a deviation of 5 % or less. If a uniform parameter is uniform in a predetermined area, it may mean that it is uniform (substantially uniform) from an average point of view.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

As used herein, the singular forms "a," "an" and "the" are intended to include the plural forms as well, unless the context clearly indicates otherwise.

When a component is arranged "above (or under)" another component or "on (or below)" the other component, it may denote not only that the component may be arranged to be in contact with an upper surface (or a lower surface) of the other component, but also that another component may be arranged between the other component and the component arranged on (or below) the other component.

It will be understood that when an element, such as an area, layer, film, region or portion, is referred to as being "on," "connected to," "coupled to," or "in contact with" another element, it can be directly on, connected to, coupled to, or in contact with the other element, or one or more intervening elements may be present. Also, if an element is referred to as being "electrically connected" to another element, this may include not only a case where they are directly connected to each other, but also a case where they are connected to each other with another element therebetween. In addition, it will also be understood that when an element is referred to as being "between" two elements, it can be the only element between the two elements, or one or more intervening elements may also be present.

Throughout the specification, "A and/or B" may denote A or B or A and B, unless particularly otherwise described. For example, "and/or" may include all combinations or any combination of a plurality of listed items. "C to D" may denote at least C and not more than D, unless particularly otherwise described.

Spatially relative terms, such as "on," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the drawings. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

As used herein, the terms "use," "using," and "used" may be considered synonymous with the terms "utilize," "utilizing," and "utilized," respectively.

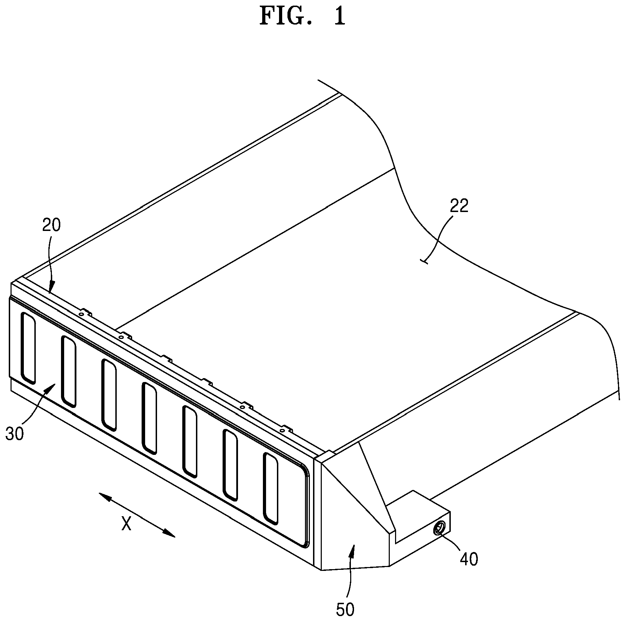

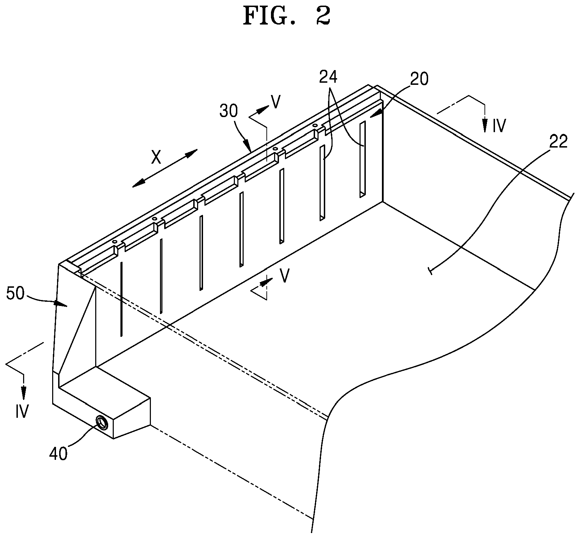

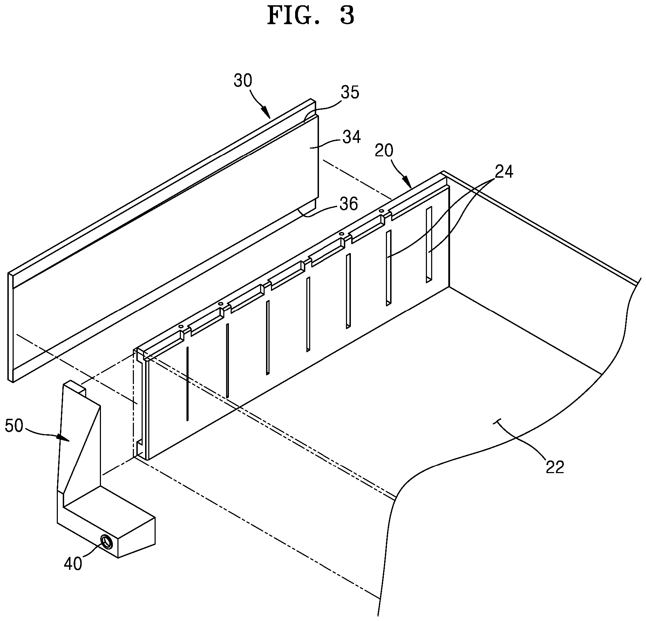

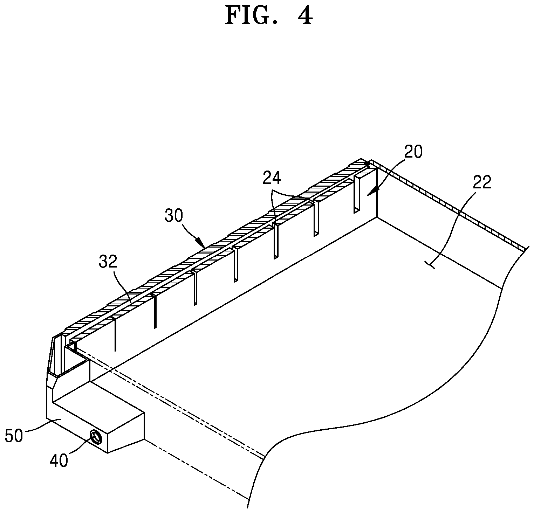

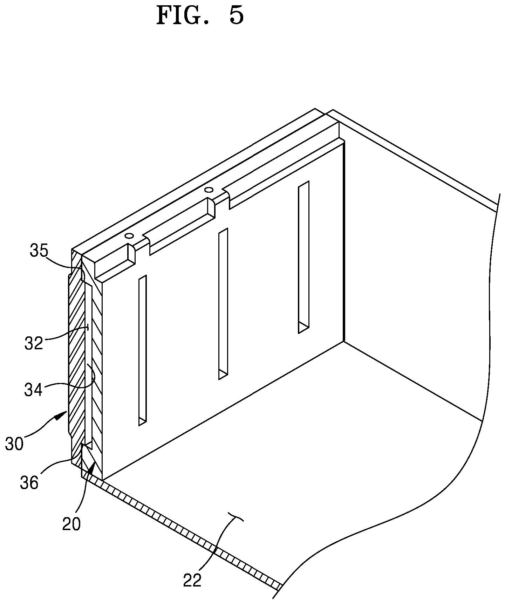

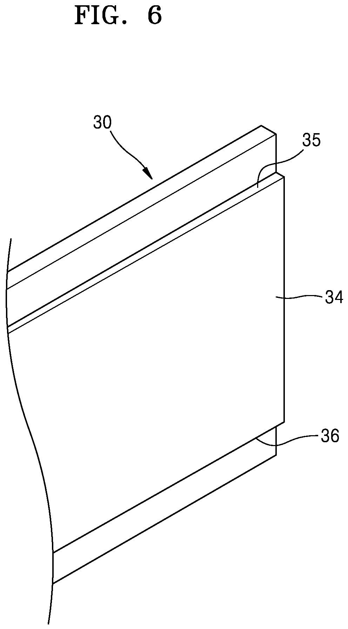

FIG. 1 is a perspective view showing an external structure in which an outer case and an inner case are combined to form a battery module according to one or more embodiments of the present disclosure. FIG. 2 is a perspective view of the structure shown in FIG. 1 viewed from another direction, according to one or more embodiments of the present disclosure. FIG. 3 is an exploded perspective view showing key components of FIG. 2, according to one or more embodiments of the present disclosure. FIG. 4 is a cross-sectional perspective view taken along the line IV-IV of FIG. 2, according to one or more embodiments of the present disclosure. FIG. 5 is a cross-sectional perspective view taken along the line V-V of FIG. 2, according to one or more embodiments of the present disclosure. FIG. 6 is a perspective view showing a detailed structure of the outer case, according to one or more embodiments of the present disclosure.

Referring to FIGS. 1 to 6, a battery module according to one or more embodiments of the present disclosure includes an inner case 20, an outer case 30, a vent hole 24, a distribution passage 32, a duct structure 50, and a fluid port 40.

The inner case 20 may be a box-shaped structure. The inner case 20 may accommodate a plurality of battery cells in an inner space 22. The battery cells may each have, for example, a prismatic shape. The inner case 20 may be formed by coupling a plurality of plates to each other.

The outer case 30 is coupled to the outside of the inner case 20. The outer case 30 is a structure that accommodates the inner case 20 and protects the battery cells.

The vent hole 24 penetrates the inside and outside of the inner case 20 (e.g., the vent hole 24 extends from the inside to the outside of the inner case 20). The vent hole 24 communicates with the inner space 22. The vent hole 24 is provided as a plurality of vent holes 24. The plurality of vent holes 24 are formed apart from each other in a first direction X, as shown, for example in FIG. 2. The first direction X may be a direction normal (e.g., perpendicular) to a center line of the vent hole 24. The vent holes 24 may have different areas from one another. The vent hole 24 (e.g., each of the vent holes 24) may be a slot-shaped long hole. The vent hole 24 (e.g., each of the vent holes 24) may be a slot-shaped hole formed long in a direction normal (e.g., perpendicular) to the first direction X.

The distribution passage 32 is arranged between the outer case 30 and the inner case 20. The distribution passage 32 is arranged to communicate with the vent hole 24. The distribution passage 32 may be formed to extend in the first direction X. The vent hole 24 communicates with a side surface defining the distribution passage 32.

Fluid may enter/exit through one end of the distribution passage 32. The other end of the distribution passage 32 is closed. One end of the distribution passage 32 is connected to the fluid port 40 provided in the outer case 30. The duct structure 50 may be provided between the distribution passage 32 and the fluid port 40. The fluid port 40 may be a fluid input port. In one or more embodiments, the fluid port 40 may be a fluid output port. The fluid that passes through the fluid port 40 may be a liquid. In one or more embodiments, the fluid that passes through the fluid port 40 may be a gas. The fluid may be a heat exchange medium for cooling battery cells.

The cross-sectional area of the distribution passage 32 varies in the first direction X. The cross-sectional area of the distribution passage 32 is defined as a cross-sectional area normal (e.g., perpendicular) to the first direction X. The cross-sectional area of the distribution passage 32 may gradually increase or decrease in the first direction X. The size of the distribution passage 32 in a direction perpendicular to the first direction X and a vertical direction may gradually increase or decrease in the first direction X.

The area of the vent hole 24 and the cross-sectional area of the distribution passage 32 at the vent hole 24 (the vent hole 24 and the distribution passage 32 communicating with each other) are inversely proportional to each other in the first direction X. More specifically, if (e.g., when) the area of the vent hole 24 is arranged to become increasingly smaller in the first direction X, the cross-sectional area of the distribution passage 32 may become increasingly larger in the first direction X. Accordingly, the product of the cross-sectional area of the distribution passage 32 and the area of the corresponding vent hole 24 may be substantially constant. As a result, the amount of fluid that enters/exits the vent hole 24 through the distribution passage 32 may always be maintained substantially constant regardless of the position of the vent hole 24. For example, where the area of the vent hole 24 is larger, the cross-sectional area of the distribution passage 32 is formed smaller, and where the area of the vent hole 24 is smaller, the cross-sectional area of the distribution passage 32 is formed larger.

An upper end portion and a lower end portion of the distribution passage 32 constitute a coupling portion of the outer case 30 and the inner case 20 (e.g., the upper end portion 35 and the lower end portion 36 of the gradient protrusion 34 of the outer case 30 are coupled to the inner case 20). In one or more embodiments, the outer case 30 includes a gradient protrusion 34 protruding in a direction facing (e.g., opposite to) the inner case 20. The gradient protrusion 34 may vary in the first direction X in the amount of protrusion. The distribution passage 32 is formed by a space between the gradient protrusion 34 and the inner case 20. The inner case 20 may be coupled to an upper end surface 35 and a lower end surface 36 of the gradient protrusion 34 in a sliding structure (e.g., the inner case 20 and the outer case 30 may slide relative to each other in the first direction X at the gradient protrusion 34). Accordingly, the inner case 20 is prevented or reduced from being separated from the gradient protrusion 34 in a vertical direction.

The protrusion amount of the gradient protrusion 34 may vary linearly with the distance from one end of the distribution passage 32 in the first direction X (e.g., the protrusion amount of the gradient protrusion 34 may vary linearly along the first direction X starting from one end of the distribution passage 32). For example, the gradient protrusion 34 may be inclined in the form of a ramp in the first direction X.

Hereinafter, operational effects of a battery module including the above-described components are described in more detail by providing an example of a case where cooling fluid is introduced through the fluid port 40.

Cooling fluid may be introduced into the fluid port 40. Cooling fluid may be transferred to the fluid port 40 by an external pump or a blowing fan. Fluid that has passed through the fluid port 40 then passes through the duct structure 50 and is supplied to the distribution passage 32. The distribution passage 32 extends in the first direction X, and the other end of the distribution passage 32 has a closed state (e.g., is closed). Accordingly, fluid supplied to the distribution passage 32 moves in the first direction X and moves into the inner space 22 of the inner case 20 through the vent hole 24 (e.g., plurality of vent holes 24). In this process, the cross-sectional area of the distribution passage 32 gradually decreases in the first direction X. In contrast, the vent hole 24 is arranged to have an increasingly larger area in the first direction X (e.g., the vent holes 24 may increase in size as the distance from the fluid port 40 increases in the first direction X). As a result, the flow rate of fluid introduced into the inner space 22 through the vent hole 24 may be maintained substantially constant regardless of the position of the vent hole 24. Therefore, the cooling effect of the battery cells 10 accommodated in the inner case 20 may be uniformly (e.g., substantially uniformly) implemented.

In one or more embodiments, no separate components are desired or required to form the distribution passage 32 because the distribution passage 32 is formed in a space between the outer case 30 and the inner case 20. As a result, manufacturing costs for forming the distribution passage 32 may be reduced.

As described above, the battery module according to one or more embodiments of the present disclosure has a gradient structure so that the cross-sectional area of the distribution passage formed between the inner case and the outer case varies in the first direction, and the area of the vent hole formed in the inner case is inversely proportional to the cross-sectional area of the distribution passage, such that the flow rate of cooling fluid introduced into the battery cells through the vent hole is maintained uniformly (e.g., substantially uniformly), thereby improving the cooling performance of the battery module.

In one or more embodiments, the distribution passage is formed in a space between the inner case and the gradient protrusion protruding from the outer case to the inner case, such that no additional structure is used to form the distribution passage, thereby simplifying the battery module's structure and reducing manufacturing costs.

A battery module according to one or more embodiments of the present disclosure has a gradient structure so that the cross-sectional area of a distribution passage formed between an inner case and an outer case varies in a first direction, and the area of a vent hole formed in the inner case is inversely proportional to the cross-sectional area of the distribution passage, such that the flow rate of cooling fluid introduced into battery cells through the vent hole is maintained uniformly (e.g., substantially uniformly), thereby improving the cooling performance of the battery module.

In one or more embodiments, the distribution passage is formed in a space between the inner case and a gradient protrusion protruding from the outer case to the inner case, such that no additional structure is used to form the distribution passage, thereby simplifying the battery module's structure and reducing manufacturing costs.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

The portable device, vehicle, and/or the battery, e.g., a battery controller, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It should be understood that embodiments described herein should be considered in a descriptive sense only and not for purposes of limitation. Descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. It is to be understood that the foregoing is an illustration of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

Embodiments are set out in the following clauses:
1. A battery module comprising:
   an inner case having an inner space in which a plurality of battery cells are accommodated, the inner case comprising a plurality of vent holes that communicate with the inner space, are apart from each other in a first direction, and have different areas from one another;
   an outer case coupled to an outside of the inner case, the outer case accommodating the inner case to protect the plurality of battery cells;
   a distribution passage between the outer case and the inner case, communicating with the plurality of vent holes, and extending in the first direction; and
   a fluid port configured for a fluid to enter and/or exit through one end of the distribution passage,
   wherein a cross-sectional area of the distribution passage varies in the first direction, and
   the areas of the plurality of vent holes and the cross-sectional area of the distribution passage, which communicate with each other, are inversely proportional to each other in the first direction.
2. The battery module of clause 1, wherein an upper end portion and a lower end portion of the distribution passage comprise a coupling portion at which the outer case and the inner case are coupled together.
3. The battery module of clause 1 or 2, wherein:
   the outer case comprises a gradient protrusion that protrudes in a direction facing the inner case,
   a protrusion amount of the gradient protrusion varies in the first direction, and
   the distribution passage is a space between the gradient protrusion and the inner case.
4. The battery module of clause 3, wherein the protrusion amount of the gradient protrusion varies linearly along the first direction starting from the one end of the distribution passage.
5. The battery module of clause 3 or 4, wherein the inner case is coupled to an upper end surface and a lower end surface of the gradient protrusion in a sliding structure.
6. The battery module of any preceding clause, wherein the plurality of vent holes are slot-shaped holes, and wherein lengths of the slot-shaped holes extend in a direction perpendicular to the first direction.
7. The battery module of any preceding clause, wherein the outer case comprises the fluid port and the one end of the distribution passage is connected to the fluid port of the outer case.
8. The battery module of clause 7, wherein the fluid port is a fluid input port.
9. The battery module of clause 7, wherein the fluid port is a fluid output port.
10. The battery module of clause 7, 8 or 9, wherein the fluid that passes through the fluid port is in a liquid state.
11. The battery module of clause 7, 8 or 9, wherein the fluid that passes through the fluid port is in a gaseous state.
12. A battery module comprising:
   an inner case having an inner space in which a plurality of battery cells are accommodated, the inner case comprising a plurality of vent holes that communicate with the inner space, are apart from each other in a first direction, and have different areas from one another;
   an outer case coupled to an outside of the inner case, the outer case accommodating the inner case to protect the plurality of battery cells;
   a distribution passage between the outer case and the inner case, communicating with the plurality of vent holes, and extending in the first direction; and
   a fluid configured to enter and/or exit through one end of the distribution passage,
   wherein a cross-sectional area of the distribution passage varies in the first direction, and
   wherein the areas of the plurality of vent holes and the cross-sectional area of the distribution passage, which communicate with each other, are inversely proportional to each other in the first direction.
13. The battery module of clause 12, wherein the outer case comprises a fluid port configured for the fluid to enter and/or exit through the one end of the distribution passage, and the one end of the distribution passage is connected to the fluid port of the outer case.
14. The battery module of clause 13, wherein the fluid port is a fluid input port.
15. The battery module of clause 13, wherein the fluid port is a fluid output port.
16. The battery module of clause 13, wherein the fluid that passes through the fluid port is in a liquid state.
17. The battery module of clause 13, wherein the fluid that passes through the fluid port is in a gaseous state.

## Claims

1. A battery module comprising:
an inner case having an inner space in which a plurality of battery cells are accommodated, the inner case comprising a plurality of vent holes that communicate with the inner space, are apart from each other in a first direction, and have different areas from one another;
an outer case coupled to an outside of the inner case, the outer case accommodating the inner case to protect the plurality of battery cells;
a distribution passage between the outer case and the inner case, communicating with the plurality of vent holes, and extending in the first direction; and
a fluid port configured for a fluid to enter and/or exit through one end of the distribution passage,
wherein a cross-sectional area of the distribution passage varies in the first direction, and
the areas of the plurality of vent holes and the cross-sectional area of the distribution passage, which communicate with each other, are inversely proportional to each other in the first direction.

2. The battery module of claim 1, wherein an upper end portion and a lower end portion of the distribution passage comprise a coupling portion at which the outer case and the inner case are coupled together.

3. The battery module of claim 1 or 2, wherein:
the outer case comprises a gradient protrusion that protrudes in a direction facing the inner case,
a protrusion amount of the gradient protrusion varies in the first direction, and
the distribution passage is a space between the gradient protrusion and the inner case.

4. The battery module of claim 3, wherein the protrusion amount of the gradient protrusion varies linearly along the first direction starting from the one end of the distribution passage.

5. The battery module of claim 3 or 4, wherein the inner case is coupled to an upper end surface and a lower end surface of the gradient protrusion in a sliding structure.

6. The battery module of any preceding claim, wherein the plurality of vent holes are slot-shaped holes, and wherein lengths of the slot-shaped holes extend in a direction perpendicular to the first direction.

7. The battery module of any preceding claim, wherein the outer case comprises the fluid port and the one end of the distribution passage is connected to the fluid port of the outer case.

8. The battery module of claim 7, wherein the fluid port is a fluid input port.

9. The battery module of claim 7, wherein the fluid port is a fluid output port.

10. The battery module of claim 7, 8 or 9, further comprising the fluid, wherein the fluid that passes through the fluid port is in a liquid state.

11. The battery module of claim 7, 8 or 9, further comprising the fluid, wherein the fluid that passes through the fluid port is in a gaseous state.

12. A battery module comprising:
an inner case having an inner space in which a plurality of battery cells are accommodated, the inner case comprising a plurality of vent holes that communicate with the inner space, are apart from each other in a first direction, and have different areas from one another;
an outer case coupled to an outside of the inner case, the outer case accommodating the inner case to protect the plurality of battery cells;
a distribution passage between the outer case and the inner case, communicating with the plurality of vent holes, and extending in the first direction; and
a fluid configured to enter and/or exit through one end of the distribution passage,
wherein a cross-sectional area of the distribution passage varies in the first direction, and
wherein the areas of the plurality of vent holes and the cross-sectional area of the distribution passage, which communicate with each other, are inversely proportional to each other in the first direction.

13. The battery module of claim 12, wherein the outer case comprises a fluid port configured for the fluid to enter and/or exit through the one end of the distribution passage, and the one end of the distribution passage is connected to the fluid port of the outer case.

14. The battery module of claim 13, wherein the fluid port is a fluid input port, or
wherein the fluid port is a fluid output port.

15. The battery module of claim 13 or 14, wherein the fluid that passes through the fluid port is in a liquid state, or
wherein the fluid that passes through the fluid port is in a gaseous state.
